# EUROPÄISCHE PATENTANMELDUNG

(11) **EP 3 308 932 A1**
(43) Veröffentlichungstag der Anmeldung: **18.04.2018**
(21) Anmeldenummer: 17195559.4
(22) Anmeldetag: 09.10.2017
(51) Int. Cl.: B29C 45/17, F16C 29/08

(54) **KAPSELN EINER LASTAUFNAHME EINER FORMSCHLIESSEINHEIT EINER SPRITZGIESSMASCHINE**

(30) Priorität: 13.10.2016 DE 102016119583
(71) Anmelder: Arburg GmbH + Co KG, 72290 Loßburg (DE)
(72) Erfinder: Duffner, Eberhardt, 72181 Starzach (DE); Bletscher, Rainer, 72270 Baiersbronn (DE)
(74) Vertreter: Reinhardt, Harry

(57) **Zusammenfassung**

Es wird eine Formschließeinheit (1) einer Spritzgießmaschine (3) vorgeschlagen.

Um eine Last eines linear beweglichen Trägers der Formschließeinheit der Spritzgießmaschine möglichst störunanfällig, präzise und/oder wartungsarm aufnehmen zu können, sind ein entlang einer Längsrichtung (5) der Formschließeinheit (1) verlagerbarer Träger (7), ein Maschinenfuß (9) zum standfesten Aufstellen der Formschließeinheit (1), eine den Träger (7) auf dem Maschinenfuß (9) abstützende Lastaufnahme (11) zur linearen Lagerung des Trägers (7) entlang der Längsrichtung (5), und eine die Lastaufnahme (11) zumindest teilweise umgebenden Kapselung (13) vorgesehen, mittels der ein bei einer Verlagerung des Trägers (7) frei werdendes Schmiermedium der Lastaufnahme (11) zumindest teilweise zurückhaltbar ist. Die Kapselung (13) kapselt die Lastaufnahme (11) quer zu und entlang der Längsrichtung (5).

## Beschreibung

Die Erfindung betrifft eine Formschließeinheit einer Spritzgießmaschine mit einem entlang einer Längsrichtung der Formschließeinheit verlagerbaren Träger, einem Maschinenfuß zum standfesten Aufstellen der Formschließeinheit und eine den Träger auf dem Maschinenfuß abstützenden Lastaufnahme zur linearen Lagerung des Trägers entlang der Längsrichtung sowie ein vorrichtungsgemäßes Verfahren.

Formschließeinheiten von Spritzgießmaschinen dienen als Bestandteil einer Spritzgießmaschine üblicherweise zum Öffnen und Schließen einer Spritzgießform entlang einer Längsrichtung der Maschine. Dazu kann ein beweglicher Formträger mittels einer Antriebsmechanik und einem entsprechenden Antrieb entlang der Längsrichtung der Formschließeinheit zwischen einer Öffnungsposition und einer Schließposition verlagert werden. Um diese Bewegung zu ermöglichen, ist ein entsprechendes Linearlager, das auch eine Gewichtskraft des beweglichen Formträgers abstützt, erforderlich.

Aus der dem Oberbegriff des Anspruches 1 zu Grunde liegenden DE 81 01 313 U1 ist eine Abstützung eines Formträgers auf einer Führung am Maschinenfuß einer Kunststoff-Spritzgießmaschine mittels eine Rollenumlaufschuhs bekannt.

Die EP 2 629 954 B1 zeigt eine Spritzgießmaschine zur Verarbeitung von Kunststoffen und anderen plastischen ziehbaren Materialien wie pulverförmige, metallische oder keramische Massen mit einer auf einem Maschinenfuß angeordneten Formschließeinheit. Der bewegliche Formträger ist mittels verschieblichen Abstützelementen auf einer Führung des Maschinenfußes gelagert.

Aus der JP 2000-289 079 A ist eine Spritzgießmaschine mit einem auf einer Führungsschiene gleitenden Führungswagen bekannt, wobei an Endkappen des Führungswagens angeordnete Dichtlippen vorgesehen sind.

Die JP 2004-351 897 A zeigt eine Schließeinheit mit einer Linearführung zum linearen Lagern einer beweglichen Werkzeughälfte, wobei eine durch eine Bewegung der beweglichen Werkzeughälfte in einer Längsrichtung der Linearführung verlängerbare und verkürzbare teleskopische Abdeckung zum Schutz der Linearführung vorgesehen ist.

Die JP 2008-254 284 A beschreibt eine Schließeinheit einer Spritzgießmaschine mit einer beweglichen Plattenlagerung, die mittels eines keilförmigen Schiebers höhenverstellbar ist.

Aufgabe der Erfindung ist es, eine möglichst störunanfällige, präzise und/oder wartungsarme Lastaufnahme eines linear beweglichen Trägers einer Formschließeinheit einer Spritzgießmaschine zu ermöglichen.

Diese Aufgabe wird durch eine Formschließeinheit mit den Merkmalen des Anspruchs 1 gelöst sowie durch ein verfahren mit den Merkmalen des Anspruches 14 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Formschließeinheit weist zumindest einen Träger, beispielsweise einen beweglichen Formträger, auf, der entlang einer Längsrichtung der Formschließeinheit verlagerbar ist. Die Gewichtskraft des Trägers wird mittels einer Lastaufnahme auf einem Maschinenfuß der Spritzgießmaschine abgestützt. Der Maschinenfuß dient zum standfesten Aufstellen der Formschließeinheit, insbesondere in einer Produktionsumgebung wie einer Maschinenhalle oder Ähnlichem. Dementsprechend können in den Maschinenfuß während eines Öffnens und Schließens einer Spritzgießform auftretende statische und/oder dynamische Lasten eingeleitet werden. Der Träger ist relativ zu dem Maschinenfuß verlagerbar, wobei der Maschinenfuß dazu insbesondere eine Linearlagerfläche aufweist. Die Linearlagerfläche kann dem Maschinenfuß mechanisch fest zugeordnet sein, insbesondere auf diesen aufgesetzt, anmontiert, aufgeschraubt sein. Alternativ ist es denkbar, dass die Linearlagerfläche einen integralen Bestandteil des Maschinenfußes darstellt. Die Lastaufnahme kann als lineare Lagerung ausgeführt sein. Unter einer linearen Lagerung kann insbesondere ein Wälzlager, ein Rollenlager, ein Gleitlager, insbesondere in Verbindung mit der Linearlagerfläche, insbesondere einer die Linearlagerfläche aufweisenden Schiene verstanden werden. Es ist denkbar, dass die Lastaufnahme dem Träger fest zugeordnet ist und entlang dem Maschinenfuß eine lineare Lagerung bildet. Der Träger und die Lastaufnahme sind dann zusammen relativ zu dem Maschinenfuß linear verlagerbar. Alternativ ist es jedoch auch denkbar, dass die Lastaufnahme dem Maschinenfuß mechanisch fest zugeordnet ist, insbesondere mechanisch mit diesem verbunden ist, und der Träger eine entsprechende Führungs- und/oder Gleit- und/oder Lagerfläche aufweist, sodass der Träger relativ zu der Lastaufnahme und dem Maschinenfuß verlagerbar ist. Gegebenenfalls kann entlang einer Längsrichtung der Formschließeinheit, insbesondere des Maschinenfußes, entsprechend eine Vielzahl solcher Lastaufnahmen angeordnet sein, über die hinweg der Träger linear lagerbar und/oder gelagert ist.

Vorteilhaft ist die Lastaufnahme zumindest teilweise von einer Kapselung umgeben, mittels der ein bei einer Verlagerung des Trägers freiwerdendes Schmiermedium der Lastaufnahme zumindest teilweise zurückhaltbar ist. Die Lastaufnahme kann mittels des Schmiermediums reibvermindert die lineare Lagerung des Trägers der Formschließeinheit gewährleisten. Dazu kann die Lastaufnahme eine Verlustschmierung und ein entsprechendes Reservoir für das Schmiermedium aufweisen. Bei dem Schmiermedium kann es sich um übliche Schmierstoffe wie Öl, Fett, Teflon und/oder Ähnliches handeln, das in Verbindung mit Gleitflächen und/oder Wälzkörpern eine verminderte Reibung und/oder einen verminderten Verschleiß bewirkt. Trotz der gegebenenfalls vorgesehenen Verlustschmierung ist es aufgrund der Kapselung möglich, das Schmiermedium zumindest teilweise zurückzuhalten, also innerhalb der Lastaufnahme zu halten. Dadurch kann eine unerwünschte Verschmutzung des Maschinenfußes mit dem Schmiermedium bestmöglich vermieden werden. Außerdem ist es möglich, eventuell vorhandene störende Verschmutzungen des Maschinenfußes, insbesondere von der Spritzgießmaschine verwendetes Granulat, von der Lastaufnahme fernzuhalten, sodass eine besonders störunanfällige, präzise und/oder reibungsarme lineare Lagerung des Trägers möglich ist. Außerdem kann durch das Zurückhalten des Schmiermediums ein Wartungsintervall, insbesondere zum Nachfüllen des Schmiermediums verlängert werden. Bestenfalls ist sogar eine wartungsfreie Versorgung der Lastaufnahme mit dem Schmiermedium denkbar. Die Kapselung kapselt die Lastaufnahme quer zu der und entlang der Längsrichtung. Dadurch kann insbesondere eine allseitige Kapselung erfolgen. Unter allseitig kann verstanden werden, dass alle Seiten, also beispielsweise sich gegenüberliegende Querseiten und Längsseiten, jeweils einen Teil der Kapselung aufweisen, vorzugsweise jeweils ein Abstreifelement. Damit können die Vorteile an allen Seiten der Lastaufnahme erzielt werden. Insbesondere kann die Kapselung allseitig und vollständig umgebend, insbesondere lückenlos umlaufend, ausgeführt sein, beispielsweise um eine besonders gute Abdichtung zu bewirken.

Bei einem Ausführungsbeispiel ist vorgesehen, dass die Kapselung eine äußere Kapselung zum Verhindern eines Eindringens von Grobschmutz in ein Inneres der Lastaufnahme und eine innere Kapselung aufweist, mittels der das Schmiermedium zumindest teilweise zurückhaltbar ist. Durch diese optionale Aufteilung der Kapselung in eine äußere Kapselung und eine innere Kapselung können die Aufgaben Zurückhalten des Grobschmutzes von außen nach innen und ein Zurückhalten des Schmiermediums von innen nach außen optimal erfüllt werden. Grobschmutz kann also außerhalb und das Schmiermedium innerhalb der Kapselung gehalten werden. Die äußere Kapselung und die innere Kapselung können als einheitliche Konstruktion ausgeführt sein, insbesondere miteinander verbunden und/oder montiert, also z.B. in einer Baugruppe die beschriebenen Wirkungen erzielen. Insbesondere ist es dadurch besonders gut möglich, eventuelle Verschmutzungen des Schmiermediums und/oder der Lastaufnahme, insbesondere bewegter Teile der Lastaufnahme, zu verhindern, wodurch eine besonders präzise Lagerung des Trägers möglich ist. Außerdem ist es dadurch besonders gut möglich, eventuelle Verunreinigungen des Maschinenfußes, insbesondere Auflagerflächen des Maschinenfußes, mit dem Schmiermedium zu unterbinden, wobei es dennoch gleichzeitig möglich ist, einen gewünschten dünnen Schmierfilm auf dem Maschinenfuß, insbesondere der Auflagerfläche, zu belassen oder auf diese/n dosiert aufzubringen.

Bevorzugt weist die Lastaufnahme ein Lagerelement auf, das von der Kapselung zumindest teilweise umgeben ist. Mittels der Kapselung kann das Lagerelement gegen Verunreinigungen geschützt werden, wobei gleichzeitig das Schmiermedium, das eventuell aus dem Lagerelement austritt, zumindest teilweise zurückgehalten werden kann. Bei dem Lagerelement kann es sich um ein übliches Lagerelement zur linearen Lagerung von Lasten handeln, insbesondere Wälzkörper aufweisend und/oder ein Gleitlager bildend. Insbesondere kann das Lagerelement einen Rollenumlaufschuh, ein Wälzlager, insbesondere Kugellager oder Nadellager und/oder Rollen aufweisen.

Bei einem weiteren Ausführungsbeispiel der Formschließeinheit ist vorgesehen, dass innerhalb der äußeren Kapselung zumindest ein Abstreifelement der inneren Kapselung zum Zurückhalten des Schmiermediums angeordnet ist. Das Abstreifelement ist bevorzugt zwischen der äußeren Kapselung und dem Lagerelement angeordnet. Dadurch ist es möglich, das Schmiermedium bereits abzustreifen, bevor dieses gegebenenfalls mit der äußeren Kapselung in Berührung kommen könnte. Dadurch kann insbesondere ein Verkleben des Grobschmutzes mit der äußeren Kapselung bestmöglich vermieden werden. Idealerweise kommt die äußere Kapselung genauso wie der Maschinenfuß nicht oder nur minimal mit dem Schmiermedium in Berührung, da dieses bereits an dem innen angeordneten Abstreifelement bzw. der inneren Kapselung zurückgehalten werden kann. Vorzugsweise kann die Kapselung, insbesondere die Abstreifelemente, das Schmiermedium oder zumindest einen Teil des Schmiermediums aufnehmen und/oder speichern. Dadurch kann das Schmiermedium dosiert wieder auf die Lagerschiene abgegeben werden, sodass die Lagerschiene immer einen gewünschten reibmindernden dünnen Schmierfilm aufweist. Überschüssiges Schmiermedium kann abgestreift werden. Insbesondere kann das Schmiermedium dazu hinsichtlich einer Viskosität und Fließeigenschaften so eingestellt sein, dass es insbesondere von den Abstreifelementen der Kapselung aufgesaugt werden kann. Bevorzugt kann die Kapselung Filz aufweisen und/oder Filz als Abstreifelement verwendet werden. Es kann also in einem Bauteil die Wirkung des Abstreifens, Speicherns und gleichmäßigen Wiederabgebens zum Erzeugen des Schmierfilms erzielt werden. Mittels der Kapselung beziehungsweise des Abstreifelements ist also das Schmiermedium abstreifbar, speicherbar und gleichmäßig wieder auf die Lagerschiene abgebbar. Um diese Funktion zu erzielen, können alternativ oder zusätzlich Schäumlinge, insbesondere elastische Schäumlinge, verwendet werden, insbesondere offenporige Schäumlinge, vorzugsweise aus einem Polymer- und oder Kautschukmaterial.

Es ist bevorzugt denkbar, dass das Abstreifelement in der äußeren Kapselung formschlüssig, reibschlüssig, kraftschlüssig und/oder stoffschlüssig fixierbar ist. Die äußere Kapselung erfüllt also vorzugsweise zumindest zwei Aufgaben, nämlich das Abstreifen des Grobschmutzes und das Halten des Abstreifelements innerhalb der Kapselung. Die innere Kapselung ist also insbesondere von der äußeren Kapselung gehalten bzw. durch diese fixiert. Insbesondere ist es denkbar, dass die äußere Kapselung einen Anpressdruck der inneren Kapselung auf den Maschinenfuß ausübt bzw. erzeugt. Dazu kann die äußere Kapselung gegenüber dem Maschinenfuß eine gewisse Vorspannung aufweisen, die über die innere Kapselung auf den Maschinenfuß wirkt. Bevorzugt ist vorteilhaft vorgesehen, dass die äußere Kapselung in einer Form an den Maschinenfuß, insbesondere einen Querschnitt der Lagerfläche des Maschinenfußes, angepasst ist, sodass ein besonders gutes Abstreifen des Grobschmutzes möglich ist. Außerdem kann die äußere Kapselung einen Durchbruch aufweisen, durch den hindurch das Schmiermedium in das Innere der Lastaufnahme, insbesondere in das Lagerelement, vorzugsweise zum Realisieren einer Verlustschmierung, ein- oder nachgefüllt werden kann. Es kann also mittels einer zusammenhängenden Kapselung beziehungsweise Konstruktion, insbesondere mittels der Aufteilung in die innere und äußere Kapselung, eine Grobschmutzabsicherung und gleichzeitig zumindest ein Zurückhalten des Schmiermediums erzielt werden. Insbesondere kann durch die innere Kapselung gleichzeitig das Zurückhalten/Abstreifen, ein Speichern und/oder gleichmäßiges Wiederabgeben des Schmiermediums auf den Maschinenfuß, insbesondere eine Lagerfläche beziehungsweise Gleitfläche des Maschinenfußes wie der Lagerschiene des Maschinenfußes erfolgen. Insbesondere erfolgt durch die innere Kapselung und/oder äußere Kapselung eine Reinigung des Maschinenfußes, insbesondere der Lagerschiene des Maschinenfußes. Die Kapselung, vorzugsweise die innere Kapselung, kann dabei gegebenenfalls entfernte Verschmutzungen aufnehmen und/oder speichern, insbesondere festhalten, wobei dennoch ein dosiertes Abgeben des Schmiermediums erfolgen kann.

Bei dem Abstreifelement kann es sich um ein beliebiges, das Schmiermedium bei einem Überstreifen des Maschinenfußes zurückhaltendes Element handeln. Insbesondere kann das Abstreifelement eine Gummiabstreiflippe, Weichdichtungen, Labyrinth-Dichtelemente und/oder Ähnliches, insbesondere einen Abstreifer oder ein beliebiges Öl-Rückhaltekonzept aufweisen. Besonders bevorzugt weist das Abstreifelement einen Filzwerkstoff auf. Dieser bietet vorteilhaft dauerelastische Eigenschaften, gute Abtreifeigenschaften und zusätzlich eine hohe Aufnahmefähigkeit für das Schmiermedium. Außerdem kann der Filzwerkstoff das Schmiermedium dosiert z.B. als dünner Schmierfilm bei einem Überstreichen der Lagerfläche beziehungsweise Gleitfläche wieder abgeben. Ferner kann der Filzwerkstoff auf einfache Art und Weise montiert, demontiert und in formstabilen Einheiten bereitgestellt bzw. produziert werden.

Besonders bevorzugt weist die Lastaufnahme einen Lagersitz auf. In dem Lagersitz kann das Lagerelement aufgenommen werden. Der Lagersitz kann so ausgestaltet sein, dass an diesem die äußere Kapselung fixierbar ist. Dazu können die äußere Kapselung und der Lagersitz bevorzugt eine Steckverbindung, eine Rastverbindung, eine Schraubverbindung und/oder Ähnliches aufweisen und/oder zusammen ausbilden. Insbesondere ist es denkbar, dass ein das Lagerelement zumindest teilweise umgebendes Gehäuse den Lagersitz und die äußeren Kapselung aufweist. Insbesondere bildet der Lagersitz zusammen mit der äußeren Kapselung das Gehäuse.

Bei einem weiteren bevorzugten Ausführungsbeispiel der Formschließeinheit ist es möglich, dass die äußere Kapselung zwei Halbschalen aufweist, die beidseitig an dem Lagersitz angeordnet und/oder anordenbar sind. Die zwei Halbschalen können auf einfache Art und Weise mit dem Lagersitz verbunden werden. Dadurch kann das das Lagerelement umgebende Gehäuse auf einfache Art und Weise vervollständigt bzw. montiert werden. Insbesondere ist es denkbar, beispielsweise für Wartungszwecke, ohne größere Demontagearbeiten an der gesamten Formschließeinheit eine oder beide der Halbschalen von dem Lagersitz zu entfernen, insbesondere um Wartungsarbeiten, wie beispielsweise eine Sichtkontrolle und/oder eine Schmierung und/oder eine Reinigung des Lagerelements durchzuführen. Nach einem erfolgreichen Abschluss einer solchen Tätigkeit können eine oder beide Halbschalen wieder beidseitig seitlich an dem Lagersitz angebracht werden.

Die Lastaufnahme kann eine Höhenverstellung aufweisen. Dadurch ist es möglich, eine Höhe der Lastaufnahme selbst zu justieren. Unter einer Höhe der Lastaufnahme kann eine in montiertem Zustand beobachtbare Ausdehnung der Lastaufnahme senkrecht zu der Längsrichtung vom Maschinenfuß in Richtung des Trägers verstanden werden. Der Träger liegt mit seiner Gewichtskraft auf der Lastaufnahme auf. Durch die Höhenverstellung können etwaige Verspannungen, verursacht durch die Gewichtskraft des Trägers, ausgeglichen werden. Insgesamt ermöglicht die Höhenverstellung eine verbesserte Gewichtskraftkompensation, insbesondere einer von dem Träger aufgenommenen Werkzeugmasse der Spritzgießform. Insbesondere ist es denkbar, für den Träger mehrere der Lastaufnahmen vorzusehen, insbesondere eine flächige Lasteinleitung zu ermöglichen. Dadurch kann ein elastisches Einfederverhalten des Trägers, insbesondere einer Werkzeugplatte, die der Träger aufweist, verbessert werden. Insbesondere kann eine dynamische Steifigkeit der bewegten Einheit während eines Spritzgießvorgangs, also insbesondere des bewegten Formträgers, verbessert werden.

Vorzugsweise ist die auf der Lastaufnahme gelagerte Höhenverstellung durch vorzugsweise in Längsrichtung der Maschine gegeneinander verschiebbaren Einzelkeile eines Doppelkeilschuhs präzise einstellbar.

Der Maschinenfuß kann eine Lagerschiene, zumindest eine Lagerfläche aufweisen. Die Lagerschiene kann als integraler Bestandteil des Maschinenfußes vorgesehen oder als separates Bauteil mit diesem mechanisch verbunden sein. Auf der Lagerschiene, die insbesondere in Längsrichtung des Maschinenfußes verläuft, kann die Lastaufnahme linear gelagert werden. Insbesondere bilden die Lastaufnahme und die Lagerschiene ein den Träger abstützendes Linearlager, also ein bewegliches Auflager beziehungsweise Loslager mit zumindest einem, insbesondere genau einem, translatorischen Freiheitsgrad entlang der Längsrichtung der Formschließeinheit.

Bei einem weiteren bevorzugten Ausführungsbeispiel ist vorgesehen, dass das Abstreifelement in der Längsrichtung gesehen zumindest einen auf der Lagerschiene aufliegenden und quer zu der Längsrichtung verlaufenden Querstreifen und zumindest einen seitlich an der Lagerschiene anliegenden Längsstreifen aufweist. Besonders bevorzugt wirken die Abstreifelemente mit der Lagerschiene zusammen. Vorzugsweise wirken die Abstreifelemente mit der Lagerschiene in einem dichtenden Anlagekontakt zusammen. Diese können dazu in der Längsrichtung und quer zu der Längsrichtung jeweils benachbart zu dem Lagerelement bzw. dieses umgebend angeordnet sein. Dabei ist es möglich, dass die Querstreifen flächig auf der Lagerschiene aufliegen, also in der Bewegungsrichtung des Lagerelements gesehen, vor und hinter diesem, und die Längsstreifen seitlich von dem Lagerelement angeordnet sind. Besonders bevorzugt können die Längsstreifen nicht auf der Lagerschiene, sondern zusätzlich oder alternativ seitlich von dieser angeordnet sein. Dies bietet den Vorteil, dass die in Längsrichtung angeordneten Längsstreifen nur teilweise seitlich mit der Lagerschiene in Anlagekontakt angeordnet sein können, wobei ein Überstand der Längsstreifen im Bereich der quer angeordneten Querstreifen mit diesen in Anlagekontakt gebracht werden kann. Dadurch kann das auf der Lagerschiene aufgesetzte Lagerelement rechteckförmig vollständig von den Filzstreifen umgeben sein. Es ist also möglich, mittels der insgesamt vier Filzstreifen, also zwei Querstreifen und zwei Längsstreifen, umgebend in alle Richtungen das Lagerelement zu kapseln, insbesondere in Form der inneren Kapselung, und so ein ungewolltes Austreten des Schmiermediums auf der Lagerschiene und seitlich der Lagerschiene zu verhindern. Das Lagerelement kann vorteilhaft allseitig gekapselt werden. Die die innere Kapselung bildenden Filzstreifen sind bevorzugt innerhalb der äußeren Kapselung angeordnet und/oder an dieser fixiert, insbesondere form-, kraft- und/oder stoffschlüssig. Die innere Kapselung wie z.B. der Filzwerkstoff der inneren Kapselung übernimmt also das Abweisen von Feinschmutz, eine allseitige Rückhaltung des Schmiermediums, insbesondere Öl, und/oder zusätzlich eine Reservefunktion beziehungsweise Speicherung und/oder zusätzlich eine Reinigungsfunktion beziehungsweise Reinigen und/oder Einlagern von abgestreiften Schmutzpartikeln wie z.B. von Staub und/oder Feinschmutzpartikeln. Die innere Kapselung kann einen Schmiermediumseintrag speichern und diesen kontinuierlich wieder an die Lagerfläche und/oder Gleitfläche abgeben. Ebenso können eventuell abgestreifte Feinschmutzpartikel gespeichert, jedoch nicht wieder abgegeben werden, da die Partikel als Feststoff und das Schmiermedium als viskoser Stoff vorliegen.

Die Aufgabe ist außerdem durch ein Verfahren mit den Merkmalen des Anspruchs 13 gelöst. Das Verfahren wird insbesondere mit einer vorab beschriebenen Formschließeinheit durchgeführt. Insofern ergeben sich die vorab beschriebenen Vorteile. Es erfolgt ein Kapseln einer den Träger abstützenden Lastaufnahme während des linearen Lagerns quer zu einer Längsrichtung und entlang der Längsrichtung. Es kann also allseitig eine Rückhaltung des Schmiermediums erfolgen. Insbesondere erfolgen ein Abstreifen und/oder Verhindern eines ungewollten Austretens des während des linearen Lagerns des Trägers mit der Lagerschiene in Berührung kommenden und für das Lagern verwendeten Schmiermediums, insbesondere auf der Lagerschiene und seitlich der Lagerschiene. Dabei kann gleichzeitig oder alternativ ein Abstreifen und/oder Aufnehmen von Feinschmutz erfolgen. Vorzugsweise erfolgen gleichzeitig oder alternativ ein Speichern des Schmiermediums und/oder ein dosiertes Wiederabgeben. Insbesondere erfolgt gleichzeitig ein Abstreifen des auf dem Maschinenfuß eventuell vorhandenen Grobschmutzes. Das Abstreifen erfolgt insbesondere jeweils mittels der Kapselung, bevorzugt erfolgen das Abstreifen des Schmiermediums und/oder von Feinschmutz/Staub mittels der inneren Kapselung und das Abstreifen des Grobschmutzes mittels der äußeren Kapselung. Die innere Kapselung ist bevorzugt innerhalb der äußeren Kapselung angeordnet, die Lastaufnahme insgesamt innerhalb der Kapselung. Insbesondere erfolgen ein Abstreifen, Speichern und dosiertes Abgeben des während des linearen Lagerns des Trägers mit dem Maschinenfuß in Berührung kommenden und für das Lagern verwendeten Schmiermediums mittels der inneren Kapselung während des linearen Lagerns. Alternativ oder gleichzeitig erfolgt das Abstreifen des während des linearen Lagerns des Trägers mit dem Maschinenfuß in Berührung kommenden Grobschmutzes mittels der äußeren Kapselung.
Weitere Vorteile ergeben sich aus den Unteransprüchen sowie aus der nachfolgenden Beschreibung eines bevorzugten Ausführungsbeispiels.

### Kurzbeschreibung der Figuren

Im Folgenden wird die Erfindung anhand der beigefügten Figuren näher erläutert.
Es zeigen:
- Fig. 1: eine schematische dreidimensionale Ansicht von schräg seitlich vorne oben einer Formschließeinheit einer Spritzgießmaschine;
- Fig. 2: eine dreidimensionale Detailansicht der in Fig. 1 gezeigten Formschließeinheit einer Lastaufnahme zum linearen Lagern eines Trägers von schräg vorne seitlich oben;
- Fig. 3: die in Fig. 2 gezeigte Lastaufnahme, jedoch in einer Explosionsansicht; und
- Fig. 4: einen Längsschnitt der in den Fig. 2 und 3 gezeigten Lastaufnahme der Formschließeinheit.

### Ausführliche Beschreibung bevorzugter Ausführungsbeispiele:

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

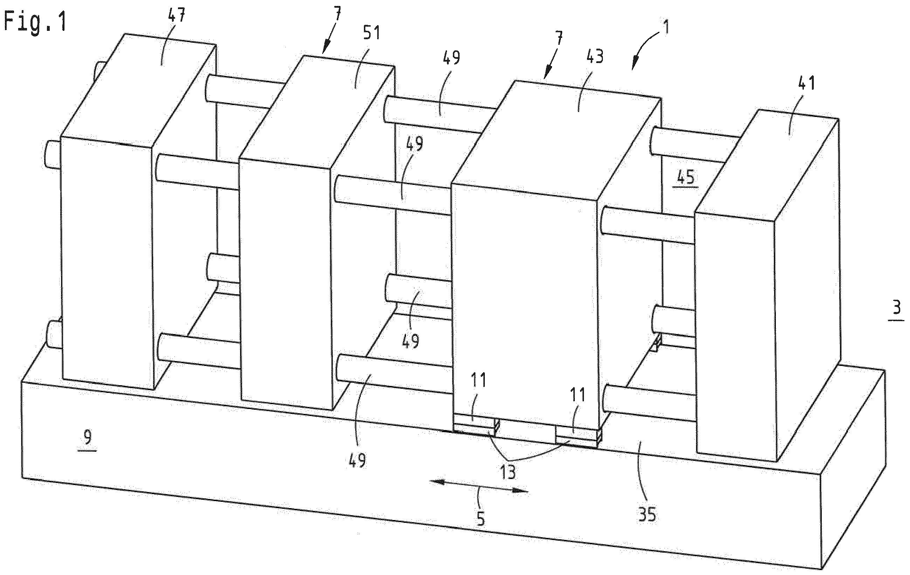

Fig. 1 zeigt eine schematisierte dreidimensionale Darstellung von schräg vorne seitlich oben einer Formschließeinheit 1 einer in Fig. 1 nur teilweise dargestellten Spritzgießmaschine 3. Die Spritzgießmaschine 3 dient zur Verarbeitung von Kunststoffen und anderen plastifizierbaren Massen wie pulvrige, metallische oder keramische Massen, die wie bei einer Spritzgießmaschine üblich die Formschließeinheit 1 auf einem Maschinenfuß 9 sowie eine zeichnerisch nicht dargestellte Spritzgießeinheit aufweist. Zwischen Formträgern, nämlich einem stationären Formträger 41 und einem beweglichen Formträger 43 kann in einem mittels des Bezugszeichens 45 angedeuteten Formspannraum eine zeichnerisch nicht dargestellte Spritzgießform, insbesondere bestehend aus mehreren Teilen, aufgenommen werden. Gegenüberliegend des stationären Formträgers 41 weist die Formschließeinheit 1 ein Abstützelement 47 auf. Zwischen dem Abstützelement 47 und dem stationären Formträger 41 erstrecken sich vorliegend insgesamt vier Holme 49. Die Holme 49 erstrecken sich entlang einer Längsrichtung 5 der Formschließeinheit 1, die in Fig. 1 mittels eines Doppelpfeiles symbolisiert ist. Anstelle der Holme 49 können auch andere Kraftübertragungselement vorgesehen sein, die die beim Spritzgießen auftretenden Kräfte übertragen. Bekannt sind hierfür z.B. bügelförmige den Formspannraum 45 umgreifende Kraftübertragungselemente. Der bewegliche Formträger 43 befindet sich zwischen dem stationären Formträger 41 und dem Abstützelement 47 und ist entlang der Längsrichtung 5 zwischen einer Öffnungsposition und einer Schließposition der Spritzgießform hin und her beweglich.

Eine Führung entlang der Längsrichtung findet dabei entlang der Holme 49 statt. Außerdem ist zwischen dem beweglichen Formträger 43 und dem Abstützelement 47 eine zusätzliche Lagerplatte 51 angeordnet. Die Lagerplatte 51 dient zur Aufnahme eines mit einer Antriebsmechanik gekoppelten Antriebs zum Bewegen des beweglichen Formträgers 43 zwischen der Öffnungsposition und der Schließposition. Bei dem Antrieb kann es sich um einen Elektromotor und bei der Antriebsmechanik um eine Kniehebelmechanik, insbesondere ein Kniehebelmehrgelenk und/oder mehrere Kniehebelmehrgelenke handeln. Die Lagerplatte 51 ist insbesondere ebenfalls entlang der Längsrichtung 5, insbesondere geführt durch die Holme 49, hin und her verlagerbar. Zum Erzielen einer Gewichtskraftkompensation des beweglichen Formträgers 43 ist zwischen dem Maschinenfuß 9 und dem beweglichen Formträger 43 zumindest eine Lastaufnahme 11 angeordnet. Vorliegend sind insgesamt vier der Lastaufnahmen 11 vorgesehen, die eine gleichmäßige Abstützung des beweglichen Formträgers 43 auf dem Maschinenfuß 9 ermöglichen. Die Lastaufnahme 11 ist auf dem Maschinenfuß 9 längsverschieblich gelagert, bildet also zusammen mit dem Maschinenfuß 9 eine lineare Lagerung für den beweglichen Formträger 43.

Gemäß einer Alternative ist es denkbar, auch die Lagerplatte 51 mit einer Gewichtskraftkompensation, insbesondere der Lastaufnahme 11, zu versehen bzw. mithilfe dieser längsverschieblich auf dem Maschinenfuß 9 zu lagern. Vorteilhaft können eventuelle elastomechanische Verformungen im statischen und/oder dynamischen Lastfall der Holme 49 mittels der Lastaufnahme 11 vermieden oder zumindest auf ein Minimum reduziert werden. Dadurch kann das Schließverhalten der nicht näher dargestellten Spritzgießform, insbesondere hinsichtlich Position und Präzision und Dichtverhalten verbessert werden. Auf den beweglichen Formträger 43 und/oder die Lagerplatte 51 wird im Folgenden vereinfachend auch in der Einzahl als "der" Träger 7 Bezug genommen. Wahlweise sind dennoch beide der Träger 7 oder zumindest einer der Träger 7, vorzugsweise nur der Formträger 43, einer Lastaufnahme 11 zugeordnet beziehungsweise von einer solchen getragen.

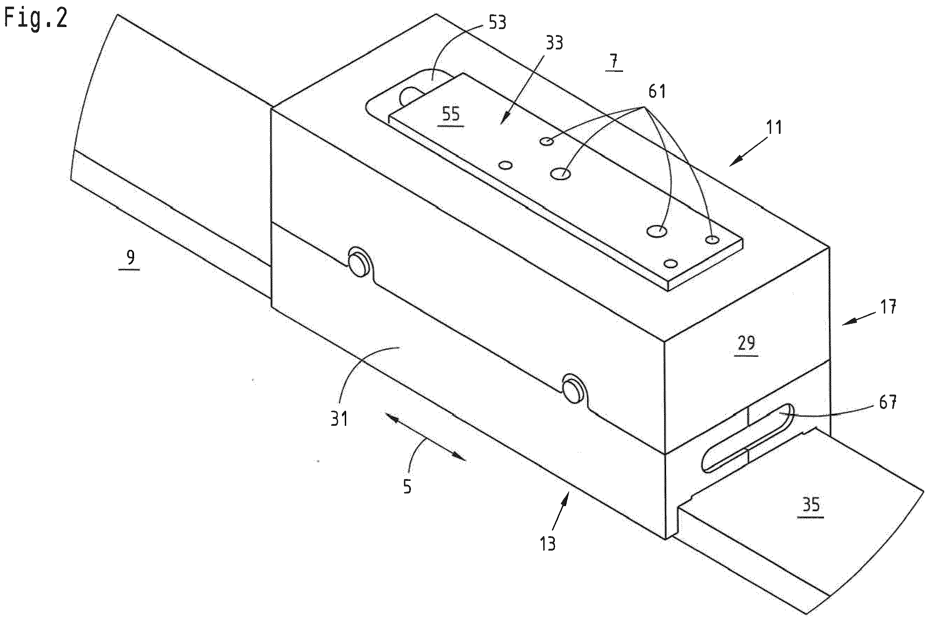

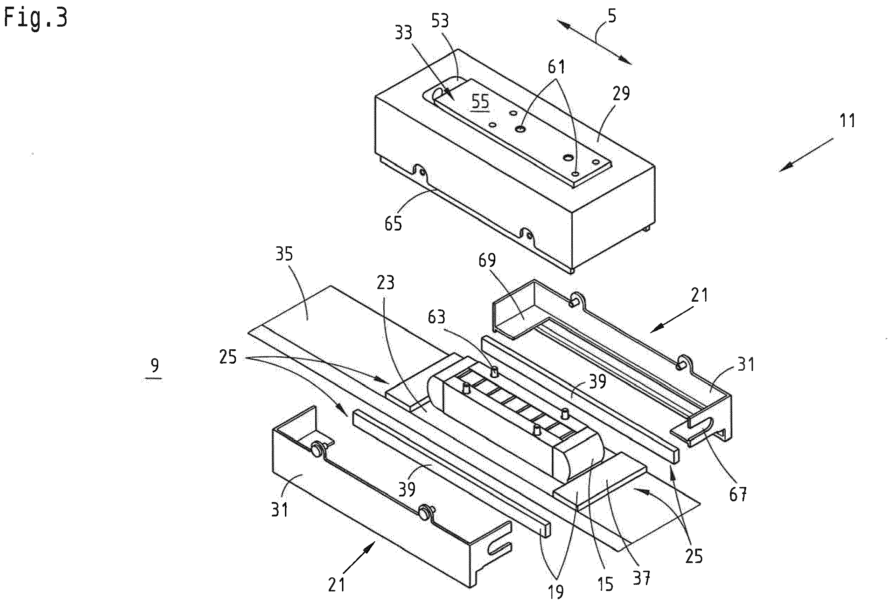

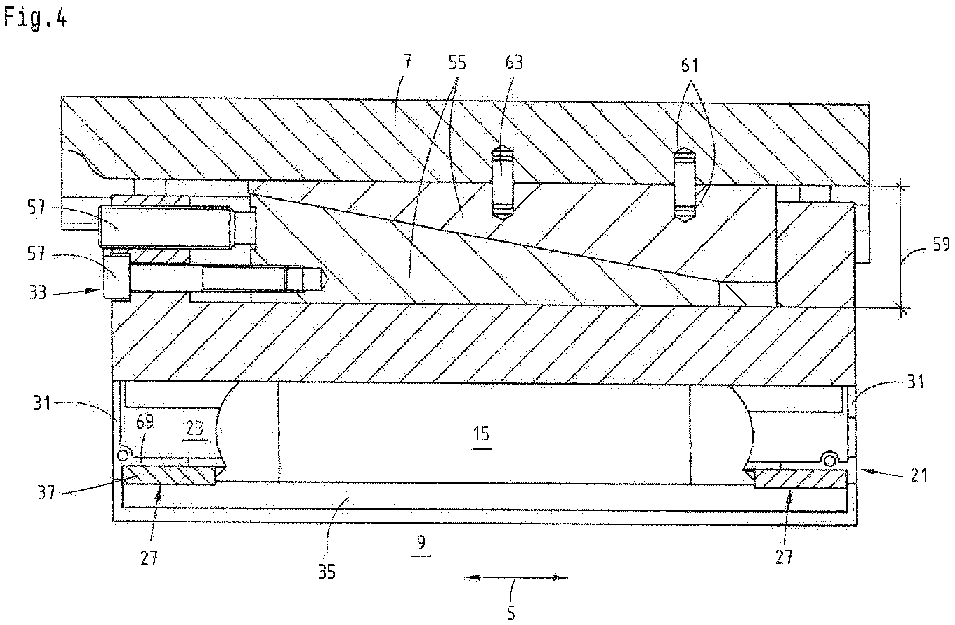

Fig. 2 zeigt eine dreidimensionale Ansicht von schräg vorne seitlich oben der in Fig. 1 gezeigten Lastaufnahme 11. Fig. 3 zeigt die Darstellung gemäß Fig. 2 der Lastaufnahme 11, jedoch in einer Explosionsansicht. Fig. 4 zeigt einen Längsschnitt der in den Fig. 2 und 3 gezeigten Lastaufnahme 11. Im Folgenden wird auf die Fig. 2 bis 4 gleichermaßen Bezug genommen, es sei denn, es ist explizit Gegenteiliges erwähnt.

Die Lastaufnahme 11 weist ein in den Fig. 3 und 4 sichtbares Lagerelement 15 auf, das vorliegend als Rollenumlaufschuh ausgebildet ist. Alternativ oder zusätzlich kann das Lagerelement 15 ein beliebiges Wälzlager, insbesondere Kugellager, Nadellager und/oder Gleitlager aufweisen. Ferner ist alternativ eine Lagerung mittels Rollen möglich.

Ferner ist in den Fig. 2 und 3 der Maschinenfuß 9 nur teilweise angedeutet und weist eine Lagerschiene 35 auf. Die Lagerschiene 35 kann als integraler Bestandteil des übrigen Maschinenfußes 9 ausgeführt sein oder auf diesen aufgesetzt und mechanisch mit diesem verbunden sein, insbesondere kraftschlüssig, formschlüssig und/oder stoffschlüssig. Die Lagerschiene 35 erstreckt sich entlang der Längsrichtung 5 der Formschließeinheit 1 und weist einen rechteckförmigen Querschnitt auf.

In einem zusammengefügten Zustand weist das Lagerelement 15 eine Kapselung 13 auf, was in Fig. 2 sich dadurch äußert, dass das Lagerelement 15 zeichnerisch nicht sichtbar ist. Die Kapselung 13 umgibt das Lagerelement 15 zumindest teilweise. Wie in Fig. 3 zu erkennen, weist die Kapselung 13 eine äußere Kapselung 21 und eine innere Kapselung 25 auf. Die äußere Kapselung 21 weist zwei Halbschalen 31 auf, die mechanisch mit einem Lagersitz 29 verbindbar sind. Die Halbschalen 31 der äußeren Kapselung 21 können mittels einer Steckverbindung mit dem Lagersitz mechanisch, insbesondere form- und kraftschlüssig, verbunden werden. Die Steckverbindung weist vorliegend pro Halbschale 31 der äußeren Kapselung zwei Stifte auf, die in entsprechende Bohrungen des Lagersitzes 29 form- und/oder kraftschlüssig einbringbar sind. Die Art der Verbindung, insbesondere die Anzahl der Stifte kann variiert werden. Die zwei Halbschalen 31 der äußeren Kapselung 21 bilden im zusammengefügten Zustand mit dem Lagersitz 29 ein Gehäuse 17 der Lastaufnahme 11. In dem Lagersitz 29 sind das Lagerelement 15 und eine Höhenverstellung 33 aufgenommen. Die Höhenverstellung 33 überträgt eine Gewichtskraft des Trägers 7 auf das Lagerelement 15, ist also zwischen dem Lagerelement 15 und dem Träger 7 angeordnet. Zur Aufnahme des Lagerelements 15 und der Höhenverstellung 33 weist der Lagersitz 29 eine schlitzförmige Ausnehmung 53 auf, der sich in der Längsrichtung 5 der Lastaufnahme 11 bzw. der Formschließeinheit 1 erstreckt.

Die innere Kapselung 25 weist zumindest ein Abstreifelement 19 auf. Vorliegend weist das Abstreifelement 19 zwei Längsstreifen 39 und zwei Querstreifen 37 auf. Das Abstreifelement 19 weist vorzugsweise einen Filzwerkstoff 27 auf. Alternativ oder zusätzlich können auch andere Werkstoffe, insbesondere Kautschuk, elastische Polymere, insbesondere Lippendichtungen, Labyrinth-Dichtungen und/oder Ähnliches als das Abstreifelement 19 vorgesehen sein.

Die Querstreifen 37 liegen auf der Lagerschiene 35 auf und erstrecken sich orthogonal zur Längsrichtung 5 der Formschließeinheit 1 bzw. der Lagerschiene 35. Die Längsstreifen 39 sind vorzugsweise jeweils seitlich der Lagerschiene 35 angeordnet und erstrecken sich dementsprechend entlang der Längsrichtung 5. Die Längsstreifen 39 können alternativ ebenfalls auf der Lagerschiene 35 aufliegen. Die Längsstreifen 39 und die Querstreifen 37 sind zumindest formschlüssig innerhalb der äußeren Kapselung 21, insbesondere der Halbschalen 31, aufgenommen und werden mittels der Halbschalen 31 vorzugsweise unter einer Vorspannung mit der Lagerschiene 35 in einen Anlagekontakt gebracht. Dadurch kann vorteilhaft ein in den Fig. nicht näher dargestelltes Schmiermedium, das zur Reibminderung des Lagerelements 15, insbesondere in Form einer Verlustschmierung, verwendbar ist, zumindest teilweise abgestreift bzw. zurückgehalten werden. Das Schmiermedium und das Lagerelement 15 befinden sich in einem Inneren 23 der Lastaufnahme 11, genauer innerhalb der Ausnehmung 53 des Lagersitzes 29.

Wie in Fig. 4 erkennbar, weist die Höhenverstellung 33 einen Doppelkeilschuh 55 mit zwei relativ zueinander entlang der Längsrichtung 5 bewegbaren Einzelkeilen auf. Eine entsprechende Bewegung der Keile des Doppelkeilschuhs 55 kann mittels zwei Justierschrauben 57 eingestellt und arretiert werden. Die Verlagerung der Keile des Doppelkeilschuhs 55 mittels der Justierschrauben 57 führt zu einer Änderung bzw. Einstellung einer Höhe 59 des Doppelkeilschuhs 55 und damit der Lastaufnahme 11.

Der Lagersitz 29 weist eine Vielzahl von Bohrungen 61 auf, in die form- und/oder kraftschlüssig Positionierstifte 63 eingreifen können. Vorliegend weist der Rollenumlaufschuh des Lagerelements 15 vier der Positionierstifte 63 und der Träger 7 zwei einen größeren Durchmesser aufweisenden Positionierstifte 63 auf. Dadurch kann die Lastaufnahme 11 exakt relativ zu dem Träger 7 und das Lagerelement 15 relativ zu dem Lagersitz 29 positioniert werden. Wie in den Fig. 2 und 3 zu erkennen, weist der Lagersitz 29 beidseitig jeweils einen Rücksprung 65 auf, sodass die Halbschalen 31 in montiertem Zustand flächenbündig mit diesem abschließen, was in Fig. 2 zu erkennen ist.

Außerdem ist in Fig. 2 ein Durchbruch 67 der äußeren Kapselung 21 sichtbar. Dieser kann beispielsweise für Wartungszwecke, insbesondere zum Nachfüllen des Schmiermediums, insbesondere an einem Schmiermedium des Lagerelements 15 verwendet werden.

Wie in Fig. 3 zu erkennen, sind die Halbschalen 31 jeweils lang gestreckt U-förmig gestaltet und weisen innenliegend eine ungefähr mittig angeordnete innen vorspringende Rippe 69 auf. Mittels der Rippe 69 können sowohl die Querstreifen 37 als auch die Längsstreifen 39 positioniert und insbesondere eingeklemmt werden. Die Querstreifen 37 können außerdem unter Vorspannung an die Lagerschiene 35 angelegt werden. Eine entsprechende Anpresskraft wird mittels der Rippe 69 auf die Querstreifen 37 übertragen. Eine entsprechende seitliche Anpresskraft seitlich der Lagerschiene 35 für die Längsstreifen 39 kann über die seitlichen Steckverbindungen von dem Lagersitz 29 auf die Habschalen 31 der äußeren Kapselung 21 und über diese auf die Längsstreifen 39 übertragen werden.

Die Lastaufnahme 11 kann vorteilhaft mittels der gegeneinander verschiebbaren Einzelkeile des Doppelkeilschuhs 55 optimal auf die Gewichtskraftkompensation der Masse des Trägers 7 und/oder des von diesem getragenen Spritzgießwerkzeugs abgestimmt werden. Durch die Verwendung mehrerer der Lastaufnahmen 11, wie in Fig. 1 gezeigt, und/oder zumindest einer der sich in der Längsrichtung 5 erstreckenden Lastaufnahme 11, insbesondere unter Verwendung des sich entlang der Längsrichtung 5 erstreckenden länglichen Rollenumlaufschuhs des Lagerelements 15, kann eine flächige Lasteinleitung der bewegten Masse des Trägers 7 in den Maschinenfuß 9 erzielt werden. Dazu können auch mehrerer Lastaufnahmen 11 z.B. nebeneinander platziert werden, um z.B. den von der Last hervorgerufenen Drehimpuls des an dem Träger 7 angeordneten Teils der Spritzgießform zuverlässig in die Lagerschiene 35 einzuleiten. Dadurch kann ein elastisches Einfederverhalten des Trägers 7, insbesondere einer Werkzeugplatte des Trägers 7 verbessert werden, insbesondere kann eine dynamische Steifigkeit in der elastomechanischen Anordnung der Formschließeinheit 1 während eines Spritzgießvorgangs verbessert werden.

In einem Fußbereich des Trägers 7 ist an zumindest einer Position, vorzugsweise an zwei oder mehreren Positionen die Lastaufnahme 11 wie in den Fig. 2 - 4 gezeigt angebracht, sodass eine optimale Anpassung der Lastaufnahme 11 an eine Varianz einer Werkzeugmasse der Spritzgießform möglich ist.

Die Kapselung 13 der Lastaufnahme 11, insbesondere mit der die Halbschalen 31 aufweisenden äußeren Kapselung 21, sorgt für optimale Schmierverhältnisse. Als Lastaufnahmeelement weist das Lagerelement 15 einen Rollenumlaufschuh auf. Alternativ ist es jedoch denkbar, andere Lagerungskonzepte wie beispielsweise Gleitlager oder Linearführungen, Wälzlager und/oder Ähnliches vorzusehen.

Die Kapselung 13 ist doppellagig aufgebaut. Von außen übernehmen die Halbschalen 31, die insbesondere als Kunststoffschalen ausgeführt sein können, einen Schutz gegen Grobschmutz und/oder Grobpartikel, insbesondere Granulat und zusätzlich die Aufnahmefunktion bzw. Lagerung der inneren Kapselung 25. Durch die äußere Kapselung 21 ist also ein Eindringen des Grobschmutzes in das Innere 23 der Lastaufnahme 11 vermeidbar oder zumindest auf ein Minimum reduzierbar. Die innere Kapselung 25, die insbesondere als Feinkapselung ausgebildet ist, ist bevorzugt als Filzabstreifer, also als das Abstreifelement 19 mit dem Filzwerkstoff 27 ausgeführt. Alternativ oder zusätzlich sind jedoch andere Abstreif- oder Rückhaltekonzepte, insbesondere Weichdichtungen und/oder Labyrinth-Dichtelemente vorstellbar. Durch die Kapselung 13 lassen sich die Schmierverhältnisse der Lastaufnahme 11 entscheidend verbessern, wobei insbesondere den Prozess störende Ansammlungen des Schmiermediums, insbesondere auch in einem Sichtbereich der Spritzgießmaschine 3, verhinderbar sind.

Im Folgenden wird ein Verfahren zum Betreiben der vorab beschriebenen Formschließeinheit 1 der Spritzgießmaschine 3 näher erläutert. Bei einem Betrieb der Spritzgießmaschine 3 erfolgt ein Abstreifen des während des linearen Lagerns des Trägers 7 mit dem Maschinenfuß 9 in Berührung kommenden und für das Lagern verwendeten Schmiermediums, insbesondere mittels der inneren Kapselung 25, also dem Abstreifelement 19. Auf dem Maschinenfuß 9 gleitet und/oder rollt das mit dem Schmiermedium geschmierte Lagerelement 15 der Lastaufnahme 11 ab. Das Lagerelement 15 wird insbesondere verlustgeschmiert. Außerdem erfolgt gegebenenfalls gleichzeitig ein Abstreifen des eventuell auf dem Maschinenfuß 9 befindlichen Grobschmutzes, insbesondere mittels der Halbschalen 31 der äußeren Kapselung.

### Bezugszeichenliste

- 1: Formschließeinheit
- 3: Spritzgießmaschine
- 5: Längsrichtung
- 7: Träger
- 9: Maschinenfuß
- 11: Lastaufnahme
- 13: Kapselung
- 15: Lagerelement
- 17: Gehäuse
- 19: Abstreifelement
- 21: äußere Kapselung
- 23: Inneres
- 25: innere Kapselung
- 27: Filzwerkstoff
- 29: Lagersitz
- 31: Halbschalen
- 33: Höhenverstellung
- 35: Lagerschiene
- 37: Querstreifen
- 39: Längsstreifen
- 41: stationärer Formträger
- 43: beweglicher Formträger
- 45: Formspannraum
- 47: Abstützelement
- 49: Holme
- 51: Lagerplatte
- 53: Ausnehmung
- 55: Doppelkeilschuh
- 57: Justierschrauben
- 59: Höhe
- 61: Bohrungen
- 63: Positionierstifte
- 65: Rücksprung
- 67: Durchbruch
- 69: Rippe

## Patentansprüche

1. Formschließeinheit (1) einer Spritzgießmaschine (3), mit:
- einem entlang einer Längsrichtung (5) der Formschließeinheit (1) verlagerbaren Träger (7),
- einem Maschinenfuß (9) zum standfesten Aufstellen der Formschließeinheit (1),
- einer den Träger (7) auf dem Maschinenfuß (9) abstützenden Lastaufnahme (11) zur linearen Lagerung des Trägers (7) entlang der Längsrichtung (5),
- einer die Lastaufnahme (11) zumindest teilweise umgebenden Kapselung (13), mittels der ein bei einer Verlagerung des Trägers (7) frei werdendes Schmiermedium der Lastaufnahme (11) zumindest teilweise zurückhaltbar ist,
**dadurch gekennzeichnet, dass** die Kapselung (13) die Lastaufnahme (11) quer zu der Längsrichtung (5) und entlang der Längsrichtung (5) kapselt.

2. Formschließeinheit nach Anspruch 1, **dadurch gekennzeichnet, dass** die Kapselung (13) Abstreifelemente (19) aufweist, von denen zumindest eines die Lastaufnahme entlang der Längsrichtung (5) kapselt.

3. Formschließeinheit nach Anspruch 2, **dadurch gekennzeichnet, dass** zumindest eines der Abstreifelemente (19) die Lastaufnahme quer zu der Längsrichtung (5) kapselt.

4. Formschließeinheit nach Anspruch 1, **dadurch gekennzeichnet, dass** mittels der Kapselung (13) das Schmiermedium zumindest teilweise zurückhaltbar, speicherbar und/oder dosiert wieder abgebbar ist.

5. Formschließeinheit nach einem der Ansprüche 1 bis 4, **dadurch gekennzeichnet, dass** die Kapselung (13) eine äußere Kapselung (21) zum Verhindern eines Eindringens von Grobschmutz in ein Inneres (23) der Lastaufnahme (11) und eine innere Kapselung (25) aufweist, mittels der das Schmiermedium zumindest teilweise zurückhaltbar, speicherbar und/oder dosiert wieder abgebbar ist.

6. Formschließeinheit nach einem der Ansprüche 1 bis 5, **dadurch gekennzeichnet, dass** die Lastaufnahme (11) ein mittels des Schmiermediums reibvermindertes Lagerelement (15) aufweist, das von der Kapselung (13) zumindest teilweise umgeben ist.

7. Formschließeinheit nach Anspruch 5 oder 6, **dadurch gekennzeichnet, dass** innerhalb der äußeren Kapselung (21) zumindest eines der Abstreifelemente (19) der inneren Kapselung (25) zum Zurückhalten, Speichern und/oder dosierten Abgeben des Schmiermediums angeordnet und/oder durch zumindest ein Element der Gruppe: Formschluss, Reibschluss, Kraftschluss, Stoffschluss, fixierbar ist.

8. Formschließeinheit nach einem der Ansprüche 2 bis 7, **dadurch gekennzeichnet, dass** das die Abstreifelemente (19) einen Filzwerkstoff (27) aufweisen.

9. Formschließeinheit nach einem der Ansprüche 5 bis 8, **dadurch gekennzeichnet, dass** die Lastaufnahme (11) einen Lagersitz (29) zur Aufnahme des Lagerelements (15) aufweist, an dem die äußere Kapselung (21) mechanisch fixierbar ist.

10. Formschließeinheit nach Anspruch 9, **dadurch gekennzeichnet, dass** die äußere Kapselung (21) zwei Halbschalen (31) aufweist, die beidseitig an dem Lagersitz (29) angeordnet und/oder anordenbar sind.

11. Formschließeinheit nach einem der vorhergehenden Ansprüche, **dadurch gekennzeichnet, dass** die Lastaufnahme (11) eine Höhenverstellung (33) zum Justieren einer Höhe der Lastaufnahme (11) aufweist, wobei die auf der Lastaufnahme (11) gelagerte Höhenverstellung (33) durch vorzugsweise in Längsrichtung der Maschine gegeneinander verschiebbaren Einzelkeile eines Doppelkeilschuhs (55) gebildet ist.

12. Formschließeinheit nach einem der vorhergehenden Ansprüche, **dadurch gekennzeichnet, dass** zumindest die Kapselung (13) oder zumindest die innere Kapselung (25) die Lastaufnahme (11) allseitig kapselt.

13. Formschließeinheit nach einem der Ansprüche 2 bis 12, **dadurch gekennzeichnet, dass** die Abstreifelemente (19) in der Längsrichtung (5) gesehen zumindest einen auf einer Lagerschiene (35), auf der der Träger (7) über die Lastaufnahme (11) linear gelagert ist, aufliegenden und quer zu der Längsrichtung (5) verlaufenden Querstreifen (37) und zumindest einen seitlich an der Lagerschiene (35) anliegenden oder auf dieser aufliegenden Längsstreifen (39) aufweist.

14. Verfahren zum linearen Lagern eines Trägers (7) einer Formschließeinheit (1) entlang einer Längsrichtung (5), insbesondere einer Formschließeinheit (1) nach einem der vorhergehenden Ansprüche, auf einem Maschinenfuß (9) in der Formschließeinheit (1), mit:
- Kapseln einer den Träger (7) abstützenden Lastaufnahme (11) während des linearen Lagerns quer zu der Längsrichtung (5) und entlang der Längsrichtung (5).

15. Verfahren nach Anspruch 14, mit:
- Abstreifen, Speichern und dosiertes Abgeben eines während des linearen Lagerns des Trägers (7) mit dem Maschinenfuß (9) in Berührung kommenden und für das Lagern verwendeten Schmiermediums mittels einer inneren Kapselung (25) einer Kapselung (13),
- Abstreifen eines während des linearen Lagerns des Trägers (7) mit dem Maschinenfuß (9) in Berührung kommenden Grobschmutzes mittels einer äußeren Kapselung (21) der Kapselung (13).
